(19) Europäisches Patentamt / European Patent Office / Office européen des brevets

(11) **EP 3 707 040 B1**

(12) **FASCICULE DE BREVET EUROPEEN**

(45) Date de publication et mention
de la délivrance du brevet:
**03.05.2023 Bulletin 2023/18**

(21) Numéro de dépôt: **18845344.3**

(22) Date de dépôt: **28.12.2018**

(51) Classification Internationale des Brevets (IPC):
***B60T 13/74*** *(2006.01)*     ***F16D 65/16*** *(2006.01)*

(52) Classification Coopérative des Brevets (CPC):
**B60T 13/741; F16D 65/16**

(86) Numéro de dépôt international:
**PCT/FR2018/053566**

(87) Numéro de publication internationale:
**WO 2019/135047 (11.07.2019 Gazette 2019/28)**

(54) **ACTIONNEUR DE FREIN ET PROCEDE DE COMMANDE ASSOCIE**

BREMSZYLINDER UND ZUGEHÖRIGES STEUERUNGSVERFAHREN

BRAKE ACTUATOR AND ASSOCIATED CONTROL METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.01.2018 FR 1850013**

(43) Date de publication de la demande:
**16.09.2020 Bulletin 2020/38**

(73) Titulaire: **Hitachi Astemo France
93700 Drancy (FR)**

(72) Inventeurs:
• **PASQUET, Thierry
94700 Vincennes (FR)**
• **RAMDANE, Abdessamed
60000 Beauvais (FR)**

(74) Mandataire: **Brevalex
Tour Trinity
1 Bis Esplanade de La Défense
CS 60347
92035 Paris La Défense Cedex (FR)**

(56) Documents cités:
EP-A1- 1 885 054        EP-A2- 0 894 685
US-A1- 2005 007 044     US-A1- 2014 156 144

EP 3 707 040 B1

**Description**

**DOMAINE TECHNIQUE**

La présente invention concerne un actionneur de frein comportant un organe de freinage, l'organe de freinage comportant un moteur à courant continu et un patin de freinage, le moteur comprenant un arbre et étant configuré pour entraîner en mouvement le patin de freinage lors de la rotation de l'arbre.

L'invention s'applique au domaine du freinage, et plus particulièrement au freinage des roues d'un véhicule.

**ÉTAT DE LA TECHNIQUE ANTÉRIEURE**

Il est connu de munir une roue d'un véhicule, notamment d'un véhicule terrestre, d'un actionneur de frein, destiné à coopérer avec un disque de frein solidaire de ladite roue, et ce dans le but de bloquer la roue en rotation.

Il est également connu de calculer la force de serrage exercée par l'actionneur sur le disque, et de commander le fonctionnement de l'actionneur selon la valeur calculée de la force de serrage.

Par exemple, dans le cas d'un actionneur dans lequel la force de serrage est fournie par un moteur électrique, il est connu de mesurer un courant consommé par le moteur et une vitesse de rotation d'un arbre du moteur pour calculer la force de serrage.

Le brevet EP0894685 constitue un exemple de l'état de la technique se rapportant au même domaine technique que l'invention.

Néanmoins, un tel actionneur ne donne pas entière satisfaction.

En effet, dans un tel actionneur, la valeur estimée de la force de serrage peut s'avérer inexacte, notamment du fait d'imprécisions sur la mesure du courant consommé et de la vitesse de rotation de l'arbre. Ceci conduit à l'application, sur le disque de freinage, d'une force trop élevée, ce qui se traduit par une surconsommation d'énergie électrique et une détérioration accélérée des composants de l'actionneur, ou alors à l'application d'une force insuffisante, ce qui se traduit par un serrage inefficace et une rotation possible de la roue correspondante.

Un but de l'invention est donc de proposer un actionneur de frein qui présente une plus grande fiabilité.

**EXPOSÉ DE L'INVENTION**

A cet effet, l'invention a pour objet un actionneur de frein du type précité, comportant un calculateur configuré pour :

- mesurer, au cours du temps, un courant consommé par le moteur et une tension entre des bornes du moteur;
- mettre en oeuvre un filtre de Kalman pour calculer, à partir du courant et de la tension mesurés, un courant filtré consommé par le moteur et une vitesse de rotation filtrée de l'arbre du moteur ;
- calculer, à partir de la valeur du courant filtré consommé par le moteur et de la valeur de la vitesse de rotation filtrée de l'arbre du moteur, une force de serrage qui est produite par l'actionneur ;
- commander l'arrêt du moteur lorsque la valeur calculée de la force de serrage atteint une valeur de consigne prédéterminée.

En effet, la mise en oeuvre du filtre de Kalman réduit le bruit impactant la mesure du courant consommé par le moteur et de la tension entre ses bornes, ce qui se traduit par une estimation plus fiable de la force de serrage exercée par l'actionneur de frein. Il en résulte l'application, sur le disque de freinage, d'une force sensiblement égale à la force de serrage souhaitée, ce qui rend l'actionneur de frein selon l'invention plus fiable que les actionneurs de freins de l'état de la technique. En outre, il résulte de ce qui précède une meilleure gestion de la consommation électrique du moteur et un allongement de la durée de vie des composants de l'actionneur.

Suivant d'autres aspects avantageux de l'invention, l'actionneur de frein comporte une ou plusieurs des caractéristiques suivantes, prise(s) isolément ou suivant toutes les combinaisons techniquement possibles :

- l'organe de freinage comporte, en outre, un réducteur agencé entre l'arbre du moteur et le patin de freinage, le patin de freinage étant solidaire d'une vis de sortie du réducteur, le calculateur étant configuré pour calculer la force de serrage selon :

$$F = 2\pi \left[ K.(i\text{-}i_0) - J\frac{d\omega}{dt} - f(\omega\text{-}\omega_0) \right] \frac{\eta.r}{S}$$

où F est la force de serrage, exprimée en N ;
K est une constante de force électromotrice du moteur;
J est un moment d'inertie du moteur;
f est un coefficient de frottement visqueux du moteur;
$\eta$ est un rendement de l'organe de freinage ;
r est un rapport de réduction du réducteur ;
S est un pas de la vis de sortie du réducteur ;
d/dt est l'opérateur « dérivée temporelle » ;
i est le courant filtré consommé par le moteur ;
io est un courant à vide de l'organe de freinage ;
w est la vitesse angulaire de rotation filtrée de l'arbre du moteur ; et
$\omega_0$ est une vitesse angulaire de rotation à vide de l'organe de freinage ;

- le calculateur est configuré pour déterminer le courant à vide et la vitesse angulaire de rotation à vide à partir des valeurs mesurées du courant consommé par le moteur et de la tension aux bornes électriques du moteur pendant un intervalle de temps au cours duquel le moteur présente un fonctionnement en régime permanent ;
- le filtre de Kalman présente un modèle d'état donné par :

$$\begin{cases} \dfrac{dx}{dt} = Ax + Bu \\ y = Cx + Du \end{cases}$$

où x est un vecteur d'état de l'organe de freinage 6, exprimé comme :

$$x = \begin{pmatrix} i \\ \omega \end{pmatrix}$$

i étant le courant consommé par le moteur; et
w étant la vitesse angulaire de rotation de l'arbre du moteur;
où u est un vecteur d'entrée de commande, exprimé comme :

$$u = \begin{pmatrix} U \\ C_u \end{pmatrix}$$

U étant la tension mesurée aux bornes du moteur ; et
$C_u$ étant un couple utile au niveau de l'arbre du moteur;
où A est une matrice de transition d'état du filtre de Kalman, s'exprimant comme :

$$A = \begin{pmatrix} -\dfrac{R}{L} & -\dfrac{K}{L} \\ -\dfrac{K}{J} & -\dfrac{f}{J} \end{pmatrix}$$

avec R une résistance interne du moteur;
K une constante magnétique du moteur;
J un moment d'inertie du moteur;
f un coefficient de frottement visqueux du moteur ; et
L une inductance interne du moteur ;
où B est une matrice d'entrée de commande du filtre de Kalman, s'exprimant comme :

$$B = \begin{pmatrix} \dfrac{1}{L} & 0 \\ 0 & -\dfrac{1}{J} \end{pmatrix}$$

et où C et D sont des matrices valant respectivement :

$$C = (1 \quad 0)$$

$$D = (0 \quad 0)$$

- le calculateur est configuré pour :

  • autoriser une alimentation du moteur en énergie électrique à compter d'un instant initial correspondant à une réception d'une commande de mise en service de l'actionneur ;
  • mémoriser la valeur du courant électrique consommé par le moteur durant un intervalle de temps compris entre l'instant initial et un instant final ultérieur;
  • optimiser les paramètres d'un modèle prédéterminé pour déterminer une valeur d'une résistance interne du moteur et/ou une valeur d'une constante magnétique du moteur;
  • mettre à jour les coefficients d'une matrice de transition d'état du filtre de Kalman en fonction de la valeur déterminée de la résistance interne du moteur et/ou de la valeur déterminée de la constante magnétique du moteur;

- le filtre de Kalman met en jeu une grandeur égale à :

$$A_d^* = I + \sum_{p=1}^{m} \frac{(A.T_e)^p}{p!}$$

où A est une matrice de transition d'état du filtre de Kalman ;

$T_e$ est un intervalle de temps séparant deux estimations successives d'un vecteur d'état du filtre de Kalman ;
I est la matrice « identité » dont le rang est égal au rang de la matrice de transition d'état ;
« ! » est l'opérateur « factorielle » ; et
m est un entier naturel non nul prédéterminé ;
le calculateur étant configuré pour calculer successivement les puissances du terme $(A.T_e)$, dans l'ordre croissant des puissances, une puissance donnée $(A.T_e)^p$, p étant un entier quelconque compris entre 1 et m, étant obtenue en multipliant la puissance immédiatement inférieure $(A.T_e)^{p-1}$ précédemment calculée par le terme $(A.T_e)$.

En outre, l'invention a pour objet un procédé de commande d'un actionneur de frein, l'actionneur comportant un moteur à courant continu et un patin de freinage, le moteur comprenant un arbre étant configuré pour entraîner en mouvement le patin de freinage lors de la rotation de l'arbre, le procédé comportant les étapes de :

- alimentation du moteur en énergie électrique ;
- mesure, au cours du temps, d'un courant consommé par le moteur et une tension entre des bornes du moteur ;
- calcul, à partir du courant et de la tension mesurés, et par la mise en oeuvre d'un filtre de Kalman, d'un courant filtré consommé par le moteur et d'une vitesse de rotation filtrée de l'arbre du moteur ;
- calcul, à partir de la valeur du courant filtré consommé par le moteur et de la valeur de la vitesse de rotation filtrée de l'arbre du moteur, d'une force de serrage qui est produite par l'actionneur ; et
- commande de l'arrêt du moteur lorsque la valeur calculée de la force de serrage atteint une valeur de consigne prédéterminée.

**BRÈVE DESCRIPTION DES DESSINS**

L'invention sera mieux comprise à l'aide de la description qui va suivre, donnée uniquement à titre d'exemple non limitatif et faite en se référant aux dessins annexés sur lesquels :

- la figure 1 est une représentation schématique d'un actionneur de frein selon l'invention ; et
- la figure 2 est un graphe représentant l'évolution temporelle d'un courant électrique consommé par un moteur de l'actionneur de la figure 1, au cours d'une phase de démarrage du moteur.

**EXPOSÉ DÉTAILLÉ DE MODES DE RÉALISATION PARTICULIERS**

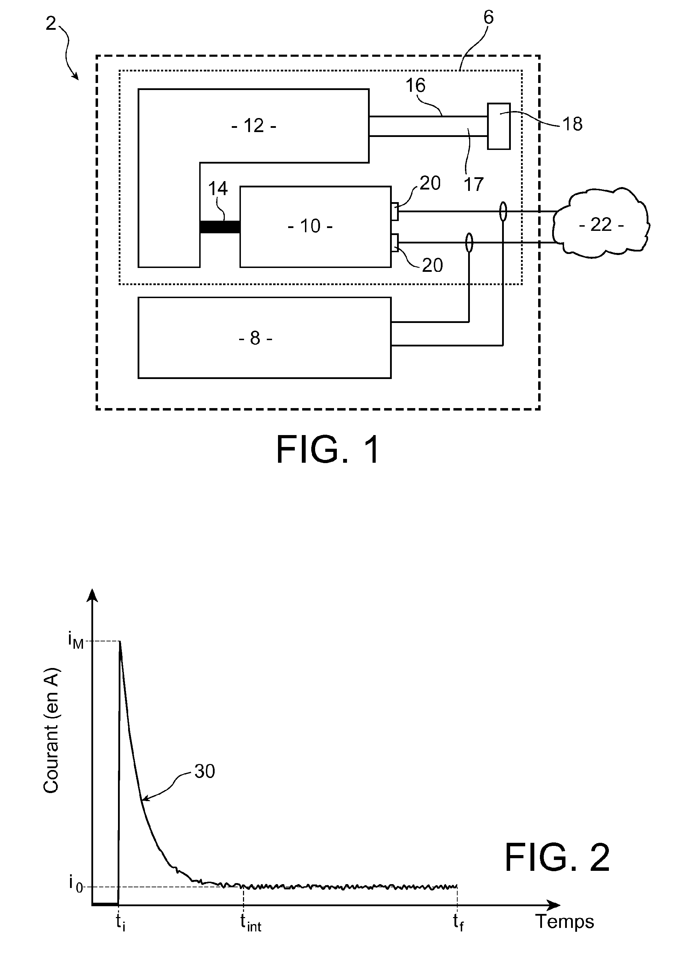

Un actionneur 2 de frein est représenté sur la figure 1.

L'actionneur 2 est embarqué à bord d'un véhicule pour assurer le blocage en rotation d'une roue correspondante du véhicule. L'actionneur 2 est un actionneur de frein électrique ou électrique et hydraulique, pour une utilisation en tant que frein de service et/ou de frein de parking.

L'actionneur 2 comporte un organe de freinage 6 et un calculateur 8 destiné à piloter le fonctionnement de l'organe de freinage 6.

L'organe de freinage 6 est configuré pour mettre en mouvement un patin de freinage 18 de l'organe de freinage 6 afin d'amener le patin de freinage 18 au contact d'un disque solidaire de la roue associée à l'actionneur 2, et ce dans le but de bloquer en rotation ladite roue.

En outre, le calculateur 8 est configuré pour commander le fonctionnement de l'organe de freinage 6.

L'organe de freinage 6 comporte un moteur 10, un réducteur 12 et le patin de freinage 18.

Le moteur 10 est un moteur électrique, plus précisément un moteur électrique à courant continu.

Le moteur 10 comporte un arbre 14 relié au réducteur 12.

Le moteur 10 comporte également des bornes 20 électriques destinées à être reliées à une source d'énergie électrique 22 propre à fournir de l'énergie électrique au moteur 10. La source d'énergie électrique 22 est, par exemple, un bus de tension du véhicule.

Le réducteur 12 comprend une vis de sortie 16 dont une extrémité libre 17 est solidaire du patin de freinage 18. La vis de sortie 16 est bloquée en rotation, de sorte qu'une rotation de l'arbre 14 du moteur 10 conduit à translation de la vis de sortie 16, et donc à une translation du patin de freinage 18.

Le calculateur 8 est configuré pour commander l'alimentation en énergie électrique du moteur 10. Plus précisément, Le calculateur 8 est configuré pour commander l'alimentation en énergie électrique du moteur 10 afin de faire fonctionner le moteur 10 (cas où le moteur 10 est alimenté en énergie électrique) ou de mettre le moteur 10 à l'arrêt (cas où l'alimentation électrique du moteur 10 est interrompue).

Le calculateur 8 est également configuré pour mesurer, au cours du temps, la valeur du courant électrique $i$ consommé par le moteur 10. Le calculateur 8 est, en outre, configuré pour mesurer la valeur de la tension électrique $U$ aux bornes 20 du moteur 10.

Le calculateur 8 est également configuré pour calculer, au cours du temps, une vitesse angulaire $\omega$ de rotation de l'arbre 14 du moteur 10. Le calcul de la vitesse angulaire $\omega$ de rotation de l'arbre 14 du moteur 10 sera décrit ultérieurement.

Le calculateur 8 est, en outre, configuré pour calculer, à tout instant, une force de serrage produite par l'actionneur 2. Plus particulièrement, le calculateur 8 est configuré pour calculer la force de serrage selon la formule (1) suivante :

$$(1) \quad F = 2\pi \left[ K.(i\text{-}i_0) - J\frac{d\omega}{dt} - f(\omega\text{-}\omega_0) \right] \frac{\eta.r}{S}$$

où $F$ est la force de serrage, exprimée en N (newton) ;

K est une constante de force électromotrice du moteur 10, encore appelée « constante magnétique », exprimée en $N.m.A^{-1}$ (newton mètre par ampère) ;
J est un moment d'inertie du moteur 10, exprimé en $N.m.s^2.rad^{-1}$ (newton mètre seconde au carré par radian) ;
f est un coefficient de frottement visqueux du moteur 10, exprimé en $N.m.s.rad^{-1}$ ;
$\eta$ est un rendement de l'organe de freinage 6, sans dimension ;
r est un rapport de réduction du réducteur 12, sans dimension ;
S est un pas de la vis de sortie 16 du réducteur 12, exprimé en m ;
d/dt est l'opérateur « dérivée temporelle » ;

i, le courant consommé par le moteur 10, est exprimé en A ;

io est un courant à vide de l'organe de freinage 6, décrit ultérieurement ;

$\omega$, la vitesse angulaire de rotation de l'arbre 14 du moteur 10 est exprimée en rad.s$^{-1}$ ; et

$\omega_0$ est une vitesse angulaire de rotation à vide de l'organe de freinage 6, décrite ultérieurement.

Le moment d'inertie J, le coefficient f de frottement visqueux, le rendement $\eta$, le rapport de réduction r et le pas de la vis S présentent des valeurs prédéterminées, caractéristiques de l'actionneur 2 et enregistrées dans une mémoire du calculateur 8.

En outre, la constante magnétique K présente une valeur qui est soit prédéterminée, soit calculée par le calculateur 8, comme cela sera décrit ultérieurement.

Pour le calcul de la valeur de la force de serrage F au cours du temps, le calculateur 8 est configuré pour mettre en oeuvre un filtre de Kalman.

Plus précisément, le calculateur 8 est configuré pour mettre en oeuvre un filtre de Kalman présentant un modèle d'état donné par la relation (2) suivante :

$$(2) \quad \begin{cases} \dfrac{dx}{dt} = Ax + Bu \\ y = Cx + Du \end{cases}$$

les composantes de bruit n'étant pas notées.

Dans la relation (2), x est un vecteur d'état de l'organe de freinage 6, exprimé comme suit :

$$x = \begin{pmatrix} i \\ \omega \end{pmatrix}$$

En outre, u est un vecteur d'entrée de commande, exprimé comme suit :

$$u = \begin{pmatrix} U \\ C_u \end{pmatrix}$$

où U, la tension aux bornes 20 du moteur 10, est exprimée en V (volt) ; et

$C_u$ est un couple utile au niveau de l'arbre 14 du moteur 10, exprimé en N.m. La couple utile $C_u$ est obtenu selon :

$$C_u = K(i - i_0)$$

La quantité y est un vecteur de mesure du filtre de Kalman, égal au courant i consommé par le moteur 10 et mesuré par le calculateur 8.

En outre, A, B, C et D sont des matrices dont les valeurs sont données ci-après :

$$A = \begin{pmatrix} -\dfrac{R}{L} & -\dfrac{K}{L} \\ -\dfrac{K}{J} & -\dfrac{f}{J} \end{pmatrix}$$

$$B = \begin{pmatrix} \dfrac{1}{L} & 0 \\ 0 & -\dfrac{1}{J} \end{pmatrix}$$

$$C = (1 \quad 0)$$

$$D = (0 \quad 0)$$

La matrice A est généralement appelée « matrice de transition d'état ». En outre, la matrice B est généralement appelée « matrice d'entrée de commande ».

R est une résistance interne du moteur 10. En outre, L est une inductance interne du moteur 10.

L'inductance interne L présente une valeur prédéterminée, caractéristique du moteur 10 et enregistrée dans la mémoire du calculateur 8.

En outre, la résistance interne R présente une valeur qui est soit prédéterminée, soit calculée par le calculateur 8, comme cela sera décrit ultérieurement.

Avec un tel filtre, le calculateur 8 est configuré pour mettre en oeuvre, successivement au cours du temps, une étape de prédiction connue du filtre de Kalman.

Classiquement, au cours de l'étape de prédiction, une valeur prédite du vecteur d'état x pour un instant de calcul donné, référencé par un indice entier k et désigné par l'expression « instant k », est calculée selon la relation (3) suivante :

$$(3) \quad \hat{x}_{k|k-1} = e^{(A.T_e)} \hat{x}_{k-1|k-1} + \left( \int_0^{T_e} e^{(A.t)} B dt \right) u_{k-1}$$

où $\hat{x}_{k|k-1}$ est la valeur prédite du vecteur d'état x à l'instant k ;

$\hat{x}_{k-1|k-1}$ est une valeur estimée du vecteur d'état x à un instant de calcul précédent, référencé par l'indice entier k-1 et désigné par l'expression « instant k-1 »;
$u_{k-1}$ est la valeur mesurée du vecteur d'entrée de commande à l'instant k-1 ;
$T_e$ est la durée écoulée entre l'instant k-1 et l'instant k ; et
e est la fonction « exponentielle ».

Toutefois, le calculateur 8 est, avantageusement, configuré pour déterminer la valeur, au cours du temps, du vecteur d'état x en réalisant une approximation fondée sur la relation (3).

Plus précisément, le calculateur 8 est configuré pour calculer une valeur approchée des termes $e^{(A.T_e)}$, noté $A_d$, et $\int_0^{T_e} e^{(At)}.B dt$, noté $B_d$.

En particulier, le calculateur 8 est configuré pour déterminer une valeur approchée $A_d^*$ du terme $A_d$ par le calcul des premiers termes du développement en série entière du terme $A_d$. Plus précisément :

$$A_d^* = I_2 + \sum_{p=1}^{m} \frac{(A.T_e)^p}{p!}$$

où $I_2$ est la matrice identité de rang 2 ;

« ! » est l'opérateur « factorielle » ; et
m est un entier naturel non nul prédéterminé.

De préférence, afin calculer la valeur approchée $A_d^*$, le calculateur 8 est configuré pour mettre en oeuvre les étapes suivantes.

Au cours d'une étape d'initialisation, le calculateur 8 crée, dans la mémoire du calculateur 8, un premier tableau G et un deuxième tableau H, chacun étant de dimension (1, m+1).

Puis, au cours d'une étape de calcul préliminaire, le calculateur 8 écrit la valeur « 1 » dans la case G(1,1) du premier tableau G. En outre, dans chacune des autres case du premier tableau G, le calculateur 8 écrit une valeur telle que :

$$G(1,p)=\frac{1}{p-1}$$

Dans ce cas, à l'issue de l'étape de calcul préliminaire, le premier tableau G s'écrit :

| 1 | 1/1 | 1/2 | ... | 1/p | ... | 1/m |
|---|-----|-----|-----|-----|-----|-----|

Puis, au cours d'une étape de calcul intermédiaire, le calculateur 8 écrit la matrice identité d'ordre 2 dans la case H(1,1) du deuxième tableau H.

Puis, le calculateur 8 écrit récursivement, en allant de la case de rang (1, 2) à la case de rang (1, m+1) du deuxième tableau H, une valeur calculée selon la formule suivante :

$$H(1,p)=G(1,p).H(1,p-1)\times A.T_e$$

où « x » indique une multiplication matricielle.

Dans ce cas, à l'issue de l'étape de calcul intermédiaire, le deuxième tableau H s'écrit :

| $I_2$ | $A.T_e$ | $(A.T_e)^2/2!$ | ... | $(A.T_e)^p/p!$ | ... | $(A.T_e)^m/m!$ |
|---|---|---|---|---|---|---|

Puis, au cours d'une étape de calcul finale, le calculateur 8 additionne les valeurs de chacune des cases du deuxième tableau H afin d'obtenir la valeur approchée $A_d^*$. La valeur approchée $A_d^*$ est calculée itérativement.

En outre, le calculateur 8 est configuré pour déterminer une valeur approchée $B_d^*$ du terme $B_d$ par le calcul des premiers termes du développement en série entière du terme $B_d$. Plus précisément :

$$B_d^*=\left( I_2.T_e+\sum_{p=1}^{n} \frac{(A.T_e)^p}{p!}.\frac{T_e}{p+1}\right)\times B$$

où n est un entier naturel non nul prédéterminé.

De préférence, les entiers m et n sont égaux. Dans ce cas, le calculateur 8 est également configuré pour créer également, dans la mémoire du calculateur 8, un troisième tableau Q et un quatrième tableau Z, chacun étant de dimension (1, m+1).

En outre, au cours de l'étape de calcul préliminaire, le calculateur 8 écrit, dans chaque case du troisième tableau Q., une valeur telle que :

$$Q(1,p)=\frac{1}{p}$$

de sorte que, à l'issue de l'étape de calcul préliminaire, le troisième tableau Q s'écrit :

| 1/1 | 1/2 | 1/3 | ... | 1/p | ... | 1/(m+1) |
|-----|-----|-----|-----|-----|-----|---------|

En outre, au cours de l'étape de calcul intermédiaire, le calculateur 8 écrit, dans chaque case du quatrième tableau Z, une valeur telle que :

$$Z(1,p)=H(1,p).Q(1,p).T_e$$

A l'issue de l'étape de calcul intermédiaire, le quatrième tableau Z s'écrit :

| $I_2.T_e$ | $A.T_e^2/2!$ | $A^2.T_e^3/3!$ | ... | $A^p.T_e^{p+1}/(p+1)!$ | ... | $A^m.T_e^{m+1}/(m+1)!$ |
|---|---|---|---|---|---|---|

En outre, au cours de l'étape de calcul finale, le calculateur 8 additionne les valeurs de chacune des cases du quatrième tableau Z, puis multiplie à droite le résultat obtenu par la matrice B afin d'obtenir la valeur approchée $B_d^*$.

De préférence, le calculateur 8 est configuré pour déterminer la valeur de la résistance interne R du moteur 10. Dans ce cas, le calculateur est, avantageusement, configuré pour également déterminer la valeur de la constance magnétique K du moteur 10.

Plus précisément, partant d'un état où l'actionneur 2 est au repos, c'est-à-dire un état où l'actionneur 2 ne coopère pas avec le disque de frein de la roue correspondante pour bloquer ladite roue en rotation, le calculateur 8 est configuré pour autoriser l'alimentation du moteur 10 en énergie électrique à compter d'un instant initial $t_i$ correspondant à la réception d'une commande de mise en service de l'actionneur 2.

Le calculateur 8 est également configuré pour acquérir la valeur du courant électrique i consommé par le moteur 10 durant un intervalle de temps compris entre l'instant initial $t_i$ et un instant final $t_f$. En outre, le calculateur 8 est configuré pour acquérir la valeur de la tension U aux bornes 20 du moteur 10 entre l'instant initial $t_i$ et l'instant final $t_f$. La courbe 30 de la figure 2 illustre l'évolution du courant i consommé par le moteur entre l'instant initial $t_i$ et l'instant final $t_f$.

L'instant final $t_f$ est choisi de sorte que, à l'instant final $t_f$, le patin de freinage 18 n'est pas encore entré en contact avec le disque de la roue correspondante.

En outre, l'instant final $t_f$ est choisi de sorte que, à l'instant final $t_f$, le moteur 10 fonctionne en régime permanent.

Le calculateur 8 est, en outre, configuré pour optimiser les paramètres d'un modèle prédéterminé pour minimiser une fonction de coût prédéterminée. De préférence, le modèle prédéterminé s'écrit :

$$i(t) = i_0 + (i_M - i_0)e^{-t/\tau}$$

où t est un instant quelconque compris entre l'instant initial $t_i$ et l'instant final $t_f$ ;

io est le courant à vide de l'organe de freinage 6 ;
$i_M$ est la valeur maximale du courant, obtenue à la l'instant initial $t_i$ ; et
$\tau$ est une constante de temps représentative de la résistance interne R et de la constance magnétique K du moteur 10.

Par exemple, une telle optimisation est obtenue en appliquant récursivement la méthode des moindres carrés.

Le courant à vide io est le courant consommé par le moteur 10 en régime permanent, avant que le patin de freinage 18 n'atteigne le disque.

Par exemple, la valeur du courant à vide $i_0$ est la valeur moyenne du courant consommé par le moteur 10 entre un instant intermédiaire $t_{int}$, ultérieur à l'instant initial $t_i$, et l'instant final $t_f$. L'instant intermédiaire $t_{int}$ est choisi de sorte que le moteur 10 puisse être considéré comme fonctionnant en régime permanent à partir de l'instant intermédiaire $t_{int}$.

En outre, la vitesse angulaire de rotation $\omega_0$ à vide est la vitesse angulaire de l'organe de freinage 6, en régime permanent, avant que le patin de freinage 18 n'atteigne le disque correspondant.

Le calculateur 8 est, en outre, configuré pour calculer la valeur de la résistance interne R en appliquant la relation (4) suivante :

$$(4) \quad R = \frac{U(t_i)}{i_M}$$

où $U(t_i)$ est la valeur de la tension U à l'instant $t_i$.

En outre, le calculateur 8 est configuré pour calculer la valeur de la constante magnétique K en appliquant la relation (5) suivante :

$$(5) \quad K = \sqrt{\frac{RJ}{\tau}}$$

En outre, le calculateur 8 est configuré pour interrompre l'alimentation du moteur 10 en énergie électrique lorsque la valeur de la force de serrage F exercée par l'organe de freinage 6 atteint une valeur de consigne prédéterminée.

La valeur de consigne correspondant typiquement à une force de serrage minimale requise pour assurer le blocage en rotation de la roue à laquelle est associé l'actionneur 2.

Le fonctionnement de l'actionneur 2, partant d'un état où l'actionneur 2 est au repos, va maintenant être décrit.

Lorsqu'un utilisateur commande la mise en service de l'actionneur 2, par exemple en appuyant sur une pédale de frein du véhicule, ou en actionnant un frein à main du véhicule, le calculateur 8 autorise, à l'instant initial $t_i$, l'alimentation du moteur 10 en énergie électrique.

Dans ce cas, l'arbre 14 du moteur 10 entraîne le réducteur 12, dont la vis de sortie 16 fait progresser le patin de freinage 18 en direction du disque de la roue correspondante.

Avantageusement, à partir de l'instant initial $t_i$, et jusqu'à l'instant final $t_f$, le calculateur 8 acquiert la valeur du courant i consommé par le moteur 10 et de la tension U aux bornes 20 du moteur 10.

Puis, le calculateur 10 détermine la valeur de la résistance interne R et de la constante magnétique K du moteur 10.

En outre, le calculateur 8 détermine la valeur du courant à vide $i_0$ et de la vitesse angulaire de rotation à vide $\omega_0$.

Puis, le calculateur 8 met à jour les coefficients de la matrice de transition d'état A avec les valeurs déterminées pour la résistance interne R et la constante magnétique K du moteur 10.

Puis, le calculateur 8 calcule les grandeurs approchées $A_d{}^*$ et $B_d{}^*$ pour le filtre de Kalman.

Puis, à partir des valeurs de la tension U aux bornes 20 du moteur 10 et du courant i consommé par le moteur 10 qui sont mesurées au cours du temps, le calculateur 8 met en oeuvre le filtre de Kalman pour déterminer, au cours du temps, une valeur filtrée du courant consommé par le moteur 10, ainsi qu'une valeur filtrée de la vitesse angulaire de rotation $\omega$ de l'arbre 14 du moteur 10. En particulier, au cours du temps, la valeur filtrée du courant consommé par le moteur 10 est égale à la première composante du vecteur d'état calculé, et la valeur filtrée de la vitesse angulaire de rotation $\omega$ de l'arbre 14 du moteur 10 est égale à la deuxième composante du vecteur d'état calculé.

En outre, à partir des valeurs filtrées du courant i consommé par le moteur 10 et de la vitesse angulaire de rotation $\omega$ de l'arbre 14 du moteur 10 qui sont fournies par le filtre de Kalman, le calculateur 8 détermine, au cours du temps, la force de serrage F exercée par l'actionneur 2.

Tant que le patin de freinage 18 n'est pas entré en contact avec le disque correspondant, le courant i consommé par le moteur 10 est égal au courant à vide $i_0$ et la vitesse angulaire de rotation de l'arbre 14 est égale à la vitesse angulaire à vide $\omega_0$, de sorte que la force de serrage F est nulle.

Dès lors que le patin de freinage 18 entre en contact avec le disque correspondant, la force de serrage croît.

Lorsque la valeur de la force de serrage atteint la valeur de consigne prédéterminée, le calculateur 8 commande l'arrêt de l'alimentation du moteur 10 en énergie électrique.

Nomenclature

2 : actionneur
6 : organe de freinage
8 : calculateur
10 : moteur
12 : réducteur
14 : arbre
16 : vis de sortie
17 : extrémité libre de la vis de sortie
18 : patin de freinage
20 : bornes électriques
22 : source d'énergie électrique

**Revendications**

1. Actionneur (2) de frein, comportant un organe de freinage (6), l'organe de freinage (6) comportant un moteur (10) à courant continu et un patin de freinage (18),

le moteur comprenant un arbre (14) et étant configuré pour entraîner en mouvement le patin de freinage (18) lors de la rotation de l'arbre (14),

l'actionneur (2) étant **caractérisé en ce qu'**il comporte un calculateur (8) configuré pour :

- mesurer, au cours du temps, un courant consommé par le moteur (10) et une tension entre des bornes (20) du moteur (10) ;
- mettre en oeuvre un filtre de Kalman pour calculer, à partir du courant et de la tension mesurés, un courant filtré consommé par le moteur (10) et une vitesse de rotation filtrée de l'arbre (14) du moteur (10) ;
- calculer, à partir de la valeur du courant filtré consommé par le moteur (10) et de la valeur de la vitesse de rotation filtrée de l'arbre (14) du moteur (10), une force de serrage qui est produite par l'actionneur (2) ;
- commander l'arrêt du moteur (10) lorsque la valeur calculée de la force de serrage atteint une valeur de consigne prédéterminée.

2. Actionneur (2) selon la revendication 1, dans lequel l'organe de freinage (6) comporte, en outre, un réducteur (12) agencé entre l'arbre (14) du moteur (10) et le patin de freinage (18), le patin de freinage (18) étant solidaire d'une vis de sortie (16) du réducteur (12),

et dans lequel le calculateur (8) est configuré pour calculer la force de serrage selon :

$$F = 2\pi \left[ K.(i\text{-}i_0) - J\frac{d\omega}{dt} - f(\omega\text{-}\omega_0) \right] \frac{\eta.r}{S}$$

où F est la force de serrage, exprimée en N ;
K est une constante de force électromotrice du moteur (10) ;
J est un moment d'inertie du moteur (10) ;
f est un coefficient de frottement visqueux du moteur (10) ;
$\eta$ est un rendement de l'organe de freinage (6) ;
r est un rapport de réduction du réducteur (12) ;
S est un pas de la vis de sortie (16) du réducteur (12) ;
d/dt est l'opérateur « dérivée temporelle » ;
i est le courant filtré consommé par le moteur (10) ;
io est un courant à vide de l'organe de freinage (6) ;
w est la vitesse angulaire de rotation filtrée de l'arbre (14) du moteur (10) ; et
$\omega_0$ est une vitesse angulaire de rotation à vide de l'organe de freinage (6).

3. Actionneur (2) selon la revendication 2, dans lequel le calculateur (8) est configuré pour déterminer le courant à vide et la vitesse angulaire de rotation à vide à partir des valeurs mesurées du courant consommé par le moteur (10) et de la tension aux bornes électriques (20) du moteur (10) pendant un intervalle de temps au cours duquel le moteur (10) présente un fonctionnement en régime permanent.

4. Actionneur (2) selon l'une quelconque des revendications 1 à 3, dans lequel le filtre de Kalman présente un modèle d'état donné par :

$$\begin{cases} \dfrac{dx}{dt} = Ax + Bu \\ y = Cx + Du \end{cases}$$

où x est un vecteur d'état de l'organe de freinage 6, exprimé comme :

$$x = \begin{pmatrix} i \\ \omega \end{pmatrix}$$

i étant le courant consommé par le moteur (10) ; et
w étant la vitesse angulaire de rotation de l'arbre (14) du moteur (10) ;

où u est un vecteur d'entrée de commande, exprimé comme :

$$u = \begin{pmatrix} U \\ C_u \end{pmatrix}$$

U étant la tension mesurée aux bornes (20) du moteur (10) ; et
$C_u$ étant un couple utile au niveau de l'arbre (14) du moteur (10) ;

où A est une matrice de transition d'état du filtre de Kalman, s'exprimant comme :

$$A = \begin{pmatrix} -\dfrac{R}{L} & -\dfrac{K}{L} \\ -\dfrac{K}{J} & -\dfrac{f}{J} \end{pmatrix}$$

avec R une résistance interne du moteur (10) ;
K une constante magnétique du moteur (10) ;
J un moment d'inertie du moteur (10) ;
f un coefficient de frottement visqueux du moteur (10) ;
et
L une inductance interne du moteur (10) ;

où B est une matrice d'entrée de commande du filtre de Kalman, s'exprimant comme :

$$B = \begin{pmatrix} \dfrac{1}{L} & 0 \\ 0 & -\dfrac{1}{J} \end{pmatrix}$$

et où C et D sont des matrices valant respectivement :

$$C = \begin{pmatrix} 1 & 0 \end{pmatrix}$$

$$D = \begin{pmatrix} 0 & 0 \end{pmatrix}$$

**5.** Actionneur (2) selon l'une quelconque des revendications 1 à 4, dans lequel le calculateur (8) est configuré pour :

- autoriser une alimentation du moteur (10) en énergie électrique à compter d'un instant initial correspondant à une réception d'une commande de mise en service de l'actionneur (2) ;
- mémoriser la valeur du courant électrique consommé par le moteur (10) durant un intervalle de temps compris entre l'instant initial et un instant final ultérieur ;
- optimiser les paramètres d'un modèle prédéterminé pour déterminer une valeur d'une résistance interne du moteur (10) et/ou une valeur d'une constante magnétique du moteur (10) ;
- mettre à jour les coefficients d'une matrice de transition d'état du filtre de Kalman en fonction de la valeur déterminée de la résistance interne du moteur (10) et/ou de la valeur déterminée de la constante magnétique du moteur (10).

**6.** Actionneur (2) selon l'une quelconque des revendications 1 à 5, dans lequel le filtre de Kalman met en jeu une grandeur égale à :

$$A_d^* = I + \sum_{p=1}^{m} \frac{(A.T_e)^p}{p!}$$

où A est une matrice de transition d'état du filtre de Kalman ;

$T_e$ est un intervalle de temps séparant deux estimations successives d'un vecteur d'état du filtre de Kalman ;

I est la matrice « identité » dont le rang est égal au rang de la matrice de transition d'état ;

« ! » est l'opérateur « factorielle » ; et

m est un entier naturel non nul prédéterminé ;

et dans lequel le calculateur (8) est configuré pour calculer successivement les puissances du terme $(A.T_e)$, dans l'ordre croissant des puissances, une puissance donnée $(A.T_e)^p$, p étant un entier quelconque compris entre 1 et m, étant obtenue en multipliant la puissance immédiatement inférieure $(A.T_e)^{p-1}$ précédemment calculée par le terme $(A.T_e)$.

**7.** Procédé de commande d'un actionneur (2) de frein, l'actionneur (2) comportant un moteur (10) à courant continu et un patin de freinage (18), le moteur comprenant un arbre (14) étant configuré pour entraîner en mouvement le patin de freinage (18) lors de la rotation de l'arbre (14),
le procédé comportant les étapes de :

- alimentation du moteur (10) en énergie électrique ;
- mesure, au cours du temps, d'un courant consommé par le moteur (10) et une tension entre des bornes (20) du moteur (10) ;
- calcul, à partir du courant et de la tension mesurés, et par la mise en oeuvre d'un filtre de Kalman, d'un courant filtré consommé par le moteur (10) et d'une vitesse de rotation filtrée de l'arbre (14) du moteur (10) ;
- calcul, à partir de la valeur du courant filtré consommé par le moteur (10) et de la valeur de la vitesse de rotation filtrée de l'arbre (14) du moteur (10), d'une force de serrage qui est produite par l'actionneur (2) ; et
- commande de l'arrêt du moteur (10) lorsque la valeur calculée de la force de serrage atteint une valeur de consigne prédéterminée.

**Patentansprüche**

**1.** Bremsaktor (2), der ein Bremsorgan (6) aufweist, wobei das Bremsorgan (6) einen Gleichstrommotor (10) und einen Bremsklotz (18) aufweist,

wobei der Motor eine Welle (14) enthält und konfiguriert ist, den Bremsklotz (18) bei der Drehung der Welle (14) in Bewegung zu versetzen,
wobei der Aktor (2) **dadurch gekennzeichnet ist, dass** er einen Rechner (8) aufweist, der konfiguriert ist, um:

- im Lauf der Zeit einen vom Motor (10) verbrauchten Strom und eine Spannung zwischen Anschlussklemmen (20) des Motors (10) zu messen;
- ein Kalman-Filter zu verwenden, um ausgehend vom gemessenen Strom und von der gemessenen Spannung einen vom Motor (10) verbrauchten gefilterten Strom und eine gefilterte Drehgeschwindigkeit der Welle (14) des Motors (10) zu berechnen;
- ausgehend vom Wert des vom Motor (10) verbrauchten gefilterten Stroms und vom Wert der gefilterten Drehgeschwindigkeit der Welle (14) des Motors (10) eine Klemmkraft zu berechnen, die vom Aktor (2) erzeugt wird;
- das Abschalten des Motors (10) zu befehlen, wenn der berechnete Wert der Klemmkraft einen vorbestimmten Sollwert erreicht.

**2.** Aktor (2) nach Anspruch 1, wobei das Bremsorgan (6) außerdem ein Getriebe (12) aufweist, das zwischen der Welle (14) des Motors (10) und dem Bremsklotz (18) angeordnet ist,

wobei der Bremsklotz (18) fest mit einer Ausgangsschraube (16) des Getriebes (12) verbunden ist,
und wobei der Rechner (8) konfiguriert ist, die Klemmkraft zu berechnen gemäß:

$$F = 2\pi \left[ K.(i\text{-}i_0) - J\frac{d\omega}{dt} - f(\omega\text{-}\omega_0) \right] \frac{\eta.r}{S}$$

wobei

F die Klemmkraft ist, ausgedrückt in N;

K eine elektromotorische Kraftkonstante des Motors (10) ist;

J ein Trägheitsmoment des Motors (10) ist;

f ein viskoser Reibungskoeffizient des Motors (10) ist;

$\eta$ ein Wirkungsgrad des Bremsorgans (6) ist;

r ein Übersetzungsverhältnis des Getriebes (12) ist;

S eine Steigung der Ausgangsschraube (16) des Getriebes (12) ist;

d/dt der Operator «Zeitableitung» ist;

i der vom Motor (10) verbrauchte gefilterte Strom ist;

$i_0$ ein Leerlaufstrom des Bremsorgans (6) ist;

$\omega$ die gefilterte Drehwinkelgeschwindigkeit der Welle (14) des Motors (10) ist; und

$\omega_0$ eine Leerlauf-Drehwinkelgeschwindigkeit des Bremsorgans (6) ist.

3. Aktor (2) nach Anspruch 2, wobei der Rechner (8) konfiguriert ist, den Leerlaufstrom und die Leerlauf-Drehwinkelgeschwindigkeit ausgehend von den gemessenen Werten des vom Motor (10) verbrauchten Stroms und der Spannung an den elektrischen Anschlussklemmen (20) des Motors (10) während eines Zeitintervalls zu bestimmen, während dessen der Motor (10) einen stationären Dauerbetrieb aufweist.

4. Aktor (2) nach einem der Ansprüche 1 bis 3, wobei das Kalman-Filter ein Zustandsmodell aufweist, das angegeben wird durch:

$$\begin{cases} \dfrac{dx}{dt} = Ax + Bu \\ y = Cx + Du \end{cases}$$

$$x = \begin{pmatrix} i \\ \omega \end{pmatrix}$$

wobei x ein Zustandsvektor des Bremsorgans 6 ist, ausgedrückt als:

wobei i der vom Motor (10) verbrauchte Strom ist; und

$\omega$ die Drehwinkelgeschwindigkeit der Welle (14) des Motors (10) ist;

wobei u ein Steuereingangsvektor ist, ausgedrückt als:

$$u = \begin{pmatrix} U \\ C_u \end{pmatrix}$$

wobei U die an den Anschlussklemmen (20) des Motors (10) gemessene Spannung ist; und

$C_u$ ein Nutzdrehmoment im Bereich der Welle (14) des Motors (10) ist;

wobei A eine Zustandsübergangsmatrix des Kalman-Filters ist, als:

$$A = \begin{pmatrix} -\dfrac{R}{L} & -\dfrac{K}{L} \\ -\dfrac{K}{J} & -\dfrac{f}{J} \end{pmatrix}$$

mit R einem inneren Widerstand des Motors (10);

K einer magnetischen Konstante des Motors (10);

J einem Trägheitsmoment des Motors (10);

f einem viskosen Reibungskoeffizienten des Motors (10); und

L einer inneren Induktivität des Motors (10);

wobei B eine Steuereingangsmatrix des Kalman-Filters ist, als:

$$B = \begin{pmatrix} \dfrac{1}{L} & 0 \\ 0 & -\dfrac{1}{J} \end{pmatrix}$$

und wobei C und D Matrizen sind, die jeweils den Wert haben:

$$C = (1 \quad 0)$$

$$D = (0 \quad 0)$$

**5.** Aktor (2) nach einem der Ansprüche 1 bis 4, wobei der Rechner (8) konfiguriert ist, um:

- eine Versorgung des Motors (10) mit elektrischer Energie ab einem Anfangszeitpunkt zu genehmigen, der einem Empfang eines Inbetriebnahmebefehls des Aktors (2) entspricht;
- den Wert des vom Motor (10) verbrauchten elektrischen Stroms während eines Zeitintervalls zwischen dem Anfangszeitpunkt und einem späteren Endzeitpunkt zu speichern;
- die Parameter eines vorbestimmten Modells zu optimieren, um einen Wert eines inneren Widerstands des Motors (10) und/oder einen Wert einer magnetischen Konstante des Motors (10) zu bestimmen;
- die Koeffizienten einer Zustandsübergangsmatrix des Kalman-Filters abhängig vom bestimmten Wert des inneren Widerstands des Motors (10) und/oder vom bestimmten Wert der magnetischen Konstante des Motors (10) zu aktualisieren.

**6.** Aktor (2) nach einem der Ansprüche 1 bis 5, wobei das Kalman-Filter eine Größe gleich:

$$A_d^* = I + \sum_{p=1}^{m} \frac{(A.T_e)^p}{p!}$$

einsetzt, wobei

A eine Zustandsübergangsmatrix des Kalman-Filters ist;
$T_e$ ein Zeitintervall ist, das zwei aufeinanderfolgende Schätzungen eines Zustandsvektors des Kalman-Filters trennt; I die Matrix «Identität» ist, deren Rang gleich dem Rang der Zustandsübergangsmatrix ist;
«!» der Operator «Fakultät» ist; und
m eine vorbestimmte natürliche Zahl ungleich Null ist;
und wobei der Rechner (8) konfiguriert ist, um nacheinander die Potenzen des Terms $(A \cdot T_e)$ in aufsteigender Reihenfolge der Potenzen zu berechnen, wobei eine gegebene Potenz $(A \cdot T_e)^p$, mit p einer beliebigen ganzen Zahl zwischen 1 und m, durch Multiplizieren der vorher berechneten nächstniedrigeren Potenz $(A \cdot T_e)^{P-1}$ mit dem Term $(A \cdot T_e)$ erhalten wird.

**7.** Steuerverfahren eines Bremsaktors (2), wobei der Aktor (2) einen Gleichstrommotor (10) und einen Bremsklotz (18) aufweist, wobei der eine Welle (14) enthaltende Motor konfiguriert ist, den Bremsklotz (18) bei der Drehung der Welle (14) in Bewegung zu versetzen,
wobei das Verfahren die Schritte aufweist:

- Versorgung des Motors (10) mit elektrischer Energie;
- Messung, im Lauf der Zeit, eines vom Motor (10) verbrauchten Stroms und einer Spannung zwischen den Anschlussklemmen (20) des Motors (10);
- Berechnung, ausgehend vom gemessenen Strom und von der gemessenen Spannung, und durch die Verwendung eines Kalman-Filters, eines vom Motor (10) verbrauchten gefilterten Stroms und einer gefilterten Drehgeschwindigkeit der Welle (14) des Motors (10);
- Berechnung, ausgehend vom Wert des vom Motor (10) verbrauchten gefilterten Stroms und vom Wert der gefilterten Drehgeschwindigkeit der Welle (14) des Motors (10), einer Klemmkraft, die vom Aktor (2) erzeugt wird; und

- Befehl des Abschaltens des Motors (10), wenn der berechnete Wert der Klemmkraft einen vorbestimmten Sollwert erreicht.

**Claims**

1. A brake actuator (2), including a braking member (6), the braking member (6) including a direct current motor (10) and a braking pad (18),

   the motor comprising a shaft (14) and being configured to movably drive the braking pad (18) during rotation of the shaft (14),
   the actuator (2) being **characterised in that** it includes a calculator (8) configured to:

   - measure, over time, a current consumed by the motor (10) and a voltage across terminals (20) of the motor (10);
   - implement a Kalman filter to calculate, from the current and voltage measured, a filtered current consumed by the motor (10) and a filtered speed of rotation of the shaft (14) of the motor (10);
   - calculate, from the value of the filtered current consumed by the motor (10) and the value of the filtered speed of rotation of the shaft (14) of the motor (10), a braking application force which is produced by the actuator (2);
   - control switching off the motor (10) when the calculated value of the braking application force reaches a predetermined set point.

2. The actuator (2) according to claim 1, wherein the braking member (6) further includes, a reducer (12) arranged between the shaft (14) of the motor (10) and the braking pad (18), the braking pad (18) being integral with an output screw (16) of the reducer (12),

   and wherein the calculator (8) is configured to calculate the braking application force according to:

$$F = 2\pi \left[ K \cdot (i - i_0) - J \frac{d\omega}{dt} - f(\omega - \omega_0) \right] \frac{\eta \cdot r}{S}$$

   where F is the braking application force, expressed in N;
   K is an electromotive force constant of the motor (10);
   J is a moment of inertia of the motor (10);
   f is a viscous friction coefficient of the motor (10);
   $\eta$ is an efficiency of the braking member (6);
   r is a reducing ratio of the reducer (12);
   S is a pitch of the output screw (16) of the reducer (12);
   d/dt is the "time derivative" operator;
   i is the filtered current consumed by the motor (10);
   io is a no-load current of the braking member (6);
   $\omega$ is the filtered angular speed of rotation of the shaft (14) of the motor (10); and
   $\omega_0$ is a no-load angular speed of rotation of the braking member (6).

3. The actuator (2) according to claim 2, wherein the calculator (8) is configured to determine the no-load current and the no-load angular speed of rotation from measured values of the current consumed by the motor (10) and the voltage across the electric terminals (20) of the motor (10) for a time interval during which the motor (10) has a steady state operation.

4. The actuator (2) according to any of claims 1 to 3, wherein the Kalman filter has a state model given by:

$$\begin{cases} \dfrac{dx}{dt} = Ax + Bu \\ y = Cx + Du \end{cases}$$

where x is a state vector of the braking member 6, expressed as:

$$x = \begin{pmatrix} i \\ \omega \end{pmatrix}$$

i being the current consumed by the motor (10); and
$\omega$ being the angular speed of rotation of the shaft (14) of the motor (10);

where u is a control input vector, expressed as:

$$u = \begin{pmatrix} U \\ C_u \end{pmatrix}$$

U being the voltage measured across the terminals (20) of the motor (10); and
$C_u$ being an effective torque at the shaft (14) of the motor (10);

where A is a state transition matrix of the Kalman filter, being expressed as:

$$A = \begin{pmatrix} -\dfrac{R}{L} & -\dfrac{K}{L} \\ \dfrac{K}{J} & -\dfrac{f}{J} \end{pmatrix}$$

with R an internal resistance of the motor (10);
K a magnetic constant of the motor (10);
J a moment of inertia of the motor (10);
f a viscous friction coefficient of the motor (10); and
L an internal inductance of the motor (10);

where B is a control input matrix of the Kalman filter, being expressed as:

$$B = \begin{pmatrix} \dfrac{1}{L} & 0 \\ 0 & -\dfrac{1}{J} \end{pmatrix}$$

and where C and D are matrices being respectively:

$$C = \begin{pmatrix} 1 & 0 \end{pmatrix}$$

$$D = \begin{pmatrix} 0 & 0 \end{pmatrix}$$

5. The actuator (2) according to any of claims 1 to 4, wherein the calculator (8) is configured to:

   - allow the motor (10) to be supplied with electric energy from an initial instant corresponding to receiving a command for switching on the actuator (2);
   - store the value of the electric current consumed by the motor (10) during a time interval between the initial instant and a subsequent final instant;
   - optimise parameters of a predetermined model to determine a value of an internal resistance of the motor (10) and/or a value of a magnetic constant of the motor (10);
   - update coefficients of a state transition matrix of the Kalman filter as a function of the determined value of the internal resistance of the motor (10) and/or the determined value of the magnetic constant of the motor (10).

6. The actuator (2) according to any of claims 1 to 5, wherein the Kalman filter involves a quantity equal to:

$$A_d^* = I + \sum_{p=1}^{m} \frac{(A.T_e)^p}{p!}$$

where A is a state transition matrix of the Kalman filter;

$T_e$ is a time interval separating two successive estimations of a state vector of the Kalman filter;

I is the "identity" matrix the rank of which is equal to the rank of the state transition matrix;

"!" is the "factorial" operator; and

m is a predetermined non-zero natural integer;

and wherein the calculator (8) is configured to successively calculate the powers of the term $(A.T_e)$, in the ascending order of the powers, a given power $(A.T_e)^p$, p being any integer between 1 and m, being obtained by multiplying the immediately lower power $(A.T_e)^{p-1}$ previously calculated by the term $(A.T_e)$.

7. A method for controlling a brake actuator (2), the actuator (2) including a direct current motor (10) and a braking pad (18), the motor comprising a shaft (14) being configured to movably drive the braking pad (18) during rotation of the shaft (14),

the method including the steps of:

- supplying the motor (10) with electric energy;
- measuring, over time, a current consumed by the motor (10) and a voltage across terminals (20) of the motor (10);
- calculating, from the current and voltage measured, and by implementing a Kalman filter, a filtered current consumed by the motor (10) and a filtered speed of rotation of the shaft (14) of the motor (10);
- calculating, from the value of the filtered current consumed by the motor (10) and the value of the filtered speed of rotation of the shaft (14) of the motor (10), a braking application force which is produced by the actuator (2); and
- controlling switching off the motor (10) when the calculated value of the braking application force reaches a predetermined set point.

# FIG. 1

# FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0894685 A